# EUROPÄISCHE PATENTSCHRIFT

(11) **EP 2 925 254 B1**
(45) Veröffentlichungstag und Bekanntmachung des Hinweises auf die Patenterteilung: **22.01.2020**
(21) Anmeldenummer: 13799008.1
(22) Anmeldetag: 28.11.2013
(51) Int. Cl.: A61C 19/10, A61C 19/00, B25J 9/16, B65G 1/00

(54) **AUTOMATISCHES VERFAHREN ZUM POSITIONIEREN EINES PROTHESENZAHNES**
AUTOMATIC METHOD FOR POSITIONING A PROSTHETIC TOOTH
PROCÉDÉ AUTOMATIQUE DE POSITIONNEMENT D'UNE DENT PROTHÉTIQUE

(30) Priorität: 28.11.2012 DE 102012221793
(43) Veröffentlichungstag der Anmeldung: 07.10.2015
(73) Patentinhaber: WESTCAM Technologies GmbH, 6068 Mils (AT)
(72) Erfinder: MÜHLBURGER, Norbert, A-6068 Mils (AT)
(74) Vertreter: Dilg, Haeusler, Schindelmann Patentanwaltsgesellschaft mbH
(86) Internationale Anmeldenummer: PCT/EP2013/074988
(87) Internationale Veröffentlichungsnummer: WO 2014/083115

(56) Entgegenhaltungen:
- US-B1- 6 328 523
- YONG-DE ZHANG ET AL: "Robotic System Approach for CompleteDenture Manufacturing", IEEE / ASME TRANSACTIONS ON MECHATRONICS, IEEE SERVICE CENTER, PISCATAWAY, NJ, US, Bd. 7, Nr. 3, 3. September 2002 (2002-09-03), Seiten 392-396, XP011076212, ISSN: 1083-4435
- SCHRAFT R D ET AL: "INTELLIGENT PICKING OF CHAOTICALLY STORED OBJECTS", ASSEMBLY AUTOMA, BRADFORD, GB, vol. 23, no. 1, 1 March 2003 (2003-03-01), pages 38-42, XP009064620, DOI: 10.1108/01445150310460079

## Beschreibung

### Technisches Gebiet

Die vorliegende Erfindung betrifft ein automatisches Verfahren zum Positionieren eines Prothesenzahnes und ein modulares System zum Positionieren eines Prothesenzahnes.

### Hintergrund der Erfindung

Es besteht häufig eine Notwendigkeit, aus einer Vielzahl von Kleinteilen einzelne Kleinteile zum Sortieren, zum Zählen oder zum Weiterverarbeiten herauszugreifen und in weiteren Prozessierungsschritten zu handhaben. Ein Beispiel für solche Kleinteile sind Prothesenzähne, welche heutzutage vornehmlich aus Kunststoff als kundenindividuelles Massenprodukt hergestellt werden. Produktionsbedingt liegen Kunststoff-Prothesenzähne nach der Produktion, beispielsweise mittels Pressverfahren oder Spritzgussverfahren, als nicht typenreines Schüttgut vor, welches nachfolgend konfektioniert werden muss. Insbesondere wird diese Konfektionierung hinsichtlich Qualität und Art des Zahnes aufgrund der exakten Position im Gebiss (beispielsweise basierend auf dem Zahnschema nach dem internationalen FDI-System) bezüglich der unterschiedlichen Zahntypen, Zahngrößen und Zahnformen vorgenommen, welche benötigt werden.

Eine Konfektionierung wird mittels manueller Konfektionierungsschritte vorgenommen, während derer üblicherweise gleichzeitig eine Qualitätsprüfung vorgenommen wird, welche teilweise als so genannte Vollprüfung durchgeführt wird, d.h. es werden bis zu 100% des Schüttguts in Hinblick auf die Qualität überprüft.

Im Folgenden wird ein solches typisches Konfektionierungs-, Handhabungs- oder Handlingverfahren beschrieben.

Im Anschluss an die Produktion der Prothesenteile und einer gegebenenfalls durchgeführten Oberflächenbehandlung, beispielsweise Glätten oder Polieren, werden typischerweise die folgenden Prozessschritte durchgeführt.
M1) manuelles Sortieren der einzelnen Zähne aus dem produktionsbedingt vorliegenden Schüttgut einer produzierten Charge durch manuelles Greifen, visuelles Klassifizieren und zuordnendes Ablegen in je ein Behältnis pro Zahntyp;
M2) manuelles Greifen eines jeweils einzelnen Zahnes aus zuvor vorsortierten, typenspezifischen Schüttgut-Behältnissen;
M3) manuelle direkte Sichtprüfung ohne oder mit optischen Hilfsmitteln an der gesamten Zahnoberfläche hinsichtlich produktionsbedingt möglicher Fehler durch handgeführte Bewegung des Einzelzahnes durch den Betrachter selbst und Ergebnisauswertung inklusive Entscheidung hinsichtlich Qualitätsvorgaben;
M4) manuelles Einlegen der einzelnen, (den Qualitätsvorgaben entsprechenden) Zähne in eine Gegenform mit konkaven Einbuchtungen für 6-8 Einzelzähne nach Konfektionierungs-/Bestellvorgaben;
M5) griffbereites zur Verfügung stellen von leeren, beschrifteten Zahnhalteplatten;
M6) manuelles Aufpressen einer Zahnhalteplatte auf die Gegenform, um die konfektionierten Einzelzähne für die nachfolgende Distribution definiert zu positionieren;
M7) ggf. alternativ oder ergänzend zu Schritt M3: manuelle direkte Sichtprüfung ohne oder mit optischen Hilfsmitteln an der vestibulären (dem Mundvorhof zugerichteten) Zahnoberfläche hinsichtlich produktionsbedingt möglicher Fehler durch handgeführte Bewegung der bestückten Zahnhalteplatte durch den Betrachter selbst und subjektive Ergebnisauswertung inklusive Entscheidung hinsichtlich Qualitätsvorgaben;
M8) manuelles Einlegen der den Qualitätsvorgaben entsprechenden, bestückten Zahnhalteplatten in handelsübliche Distributionseinheiten;
Ein solcher Handhabungsprozess ist sowohl hinsichtlich der zeitlichen Abfolge als auch hinsichtlich der Qualität für jeden einzelnen Zahn einer hohen Variation unterworfen und sehr zeitaufwändig.

"Robotic System Approach for Complete Denture Manufacturing" (Yong-De Zhang; XP011076212) zeigt ein automatisches Verfahren zum Positionieren eines Prothesenzahnes mittels eines Roboterarms, welcher einen spezifischen Prothesenzahn greift und automatisch den gegriffenen Prothesenzahn positioniert.

### Darstellung der Erfindung

Somit mag es einen Bedarf geben ein Verfahren zum Positionieren von Kleinteilen, insbesondere Prothesenzähnen, zu ermöglichen, welcher geringeren Variationen unterworfen ist.

Dieser Bedarf wird durch ein Verfahren zum Positionieren von Prothesenzähnen sowie ein modulares System zum Positionieren von Prothesenzähnen gemäß den unabhängigen Patentansprüchen gelöst. Bevorzugte Ausführungsbeispiele werden in den abhängigen Ansprüchen beschrieben.

Gemäß einem beispielhaften Aspekt weist ein automatisches Verfahren zum Positionieren eines Prothesenzahnes mittels eines modularen Systems auf: Bereitstellen eines Prothesenzahnes; automatisches Greifen eines spezifischen Prothesenzahnes an zumindest einem aus einer Mehrzahl von vordefinierten Griffpunkten; und automatisches Positionieren des gegriffenen Prothesenzahnes in eine vollständig definierte Position.

Insbesondere mag die Position beispielsweise bezüglich des gesamten oder eines Teils oder Moduls des modularen Systems vollständig definiert sein. Alternativ mag die räumliche Position bezüglich nachfolgenden Arbeitsschrittes oder für nachfolgend definierte Weiterbearbeitung vollständig definiert sein. Auch eine vollständige Definition der Position bezüglich eines absoluten Koordinatensystems kann hierunter verstanden werden.

Insbesondere mag das Bereitstellen eines Prothesenzahnes oder künstlichen Zahnes unabhängig von der vorausgehenden Produktionsmethode sein. Ferner mag das automatische Greifen beispielsweise an einem oder mehreren ausgewählter Griffpunkte erfolgen, welche vorab aus der Mehrzahl von vorgegeben möglichen Griffpunkten ausgewählt wurden. Beispielsweise mag bei dem Verfahren ein Auswählen zumindest eines Griffpunktes aus der Mehrzahl von vordefinierten Griffpunkten stattfinden. Zum Beispiel mag für jeden Typ von Prothesenzähnen eine oder eine Mehrzahl von Griffpunkten vorgegeben bzw. vordefiniert sein. Aus dieser Mehrzahl von möglichen Griffpunkten mag dann ein geeigneter Griffpunkt ausgewählt werden, wobei die Auswahl auf der Lage und/oder Positionierung des spezifischen Prothesenzahnes basiert.

Insbesondere mag das automatische Positionieren mittels eines Greifers oder Greifarms oder eine Saugpipette durchgeführt werden, welcher mittels eines Steuerprogramms oder einer Steuereinheit derart gesteuert werden, dass der Prothesenzahn nach einem Ablegen oder Absetzen des Prothesenzahnes in einer vollständig definierten Position ausgerichtet ist. Insbesondere mag der Greifer oder Greifarm in allen Raumrichtungen beweglich sein, so dass mittels ihm aus jeder beliebigen ursprünglichen Ausrichtung des Prothesenzahnes eine gewünschte vollständig definierte Position, Ausrichtung oder Lage erzielbar ist.

Das Bereitstellen des Prothesenzahnes mag mittels Herausgreifen eines einzelnen Prothesenzahnes aus einem Schüttgutbehältnis, in welchem beispielweise eine Mehrzahl von einzelnen Prothesenzähnen vorhanden ist, durchgeführt werden. In dem Schüttgutbehältnis mögen hierbei unsortierte Prothesenzähne vorhanden sein. Alternativ mag der Prothesenzahn auch zusammen mit einer Mehrzahl von anderen Prothesenzähnen bereitgestellt werden, beispielsweise indem ein Schüttgutbehältnis entleert oder ausgeschüttet wird.

Insbesondere mag der Begriff "Prothesenzahn" neben vollständigen künstlichen Zähnen auch Zahnkronen und anderen dauerhaften oder provisorischen Zahnersatz umfassen, welcher beispielsweise aus Kunststoff oder ähnlichen Materialien hergestellt ist.

Insbesondere mag der Begriff "vollständig definierte Position" bedeuten, dass das Objekt, d.h. der Prothesenzahn hinsichtlich aller drei Raumkoordinaten und aller drei Rotationsfreiheitsgrade bzw. Winkelkoordinaten definiert ist. Somit ist die Position nicht nur hinsichtlich der räumlichen Position des Prothesenzahnes, sondern auch hinsichtlich der Ausrichtung des Prothesenzahnes definiert. Die Position mag hierbei insbesondere gegenüber dem Gesamtsystem, d.h. eines, mehrerer oder aller Module des modularen Systems, gegeben sein.

Der Begriff "mögliche Griffpunkte" mag insbesondere bedeuten, dass die entsprechenden Stellen des Prothesenzahnes besonders geeignet sind, um den Prothesenzahn an diesen Stellen zu greifen. Die Eignung mag sich insbesondere daraus ergeben, dass diese Stellen leicht zugänglich sind und/oder ausreichend stabil sind, so dass keine Beschädigung des Prothesenzahnes auftritt oder dass eine solche Beschädigung nur mit einer kleinen Wahrscheinlichkeit auftritt, wenn dieser, beispielsweise mittels einer Greifers oder Manipulators, an diesen Stellen gegriffen wird.

Gemäß einem exemplarischen Aspekt wird ein modulares System zum Positionieren eines Prothesenzahnes geschaffen, wobei das modulare System aufweist: eine automatische Greifeinrichtung, welche derart eingerichtet ist, dass sie einen spezifischen Prothesenzahn an zumindest einem aus einer Mehrzahl von vordefinierten Griffpunkten greift; und eine automatische Positioniereinrichtung, die derart eingerichtet ist, dass sie den gegriffenen Prothesenzahn in eine vollständig definierte Position bezüglich des modularen Systems bringt.

Die Greifeinrichtung mag beispielsweise ein Greifer, ein Greifarm, eine automatische Manipulationsvorrichtung sein. Ferner mag die Greifeinrichtung gleichzeitig auch die Aufgabe der Positioniereinrichtung übernehmen, jedoch können die beiden Aufgaben auch durch unterschiedliche Einrichtungen oder Einheiten übernommen werden. Das modulare System mag ferner eine Prozessoreinheit, beispielsweise einen Rechner, aufweisen, welcher dazu eingerichtet ist, ein Steuersignal zu erzeugen, das derart eingerichtet ist, dass es Bewegungen der Manipulationseinrichtung, beispielweise einen Greifer, steuert.

Gemäß einem weiteren beispielhaften Aspekt wird ein computerlesbares Speichermedium bereitgestellt, in dem ein Programm gespeichert ist, das, wenn es von einem Prozessor ausgeführt wird, zum Durchführen eines Verfahrens gemäß einem exemplarischen Aspekt eingerichtet ist. Gemäß einem weiteren beispielhaften Aspekt wird ein Programm-Element bereitgestellt, das, wenn es von einem Prozessor ausgeführt wird, zum Durchführen eines Verfahrens gemäß einem exemplarischen Aspekt eingerichtet ist.

Mittels eines Positionierungsverfahren, Handlingverfahren oder Konfektionierungsverfahren gemäß dem exemplarischen Aspekt mag es möglich sein, einen einzelnen oder vereinzelten Prothesenzahl aus einer unvollständig definierten Lage in eine vollständig definierte Position oder Lage zu bringen oder überzuführen. Somit mag es möglich sein, eine reproduzierbare Fixposition für den Prothesenzahn zu erzielen. Eine solche reproduzierbare Fixposition mag insbesondere dazu führen, dass der Handhabungsprozess, Handhabungsverfahren oder Handlingverfahren vollständig oder zumindest im Wesentlichen vollständig automatisiert werden kann. Hierdurch mag es ermöglicht werden, einen Handhabungsprozess bereitzustellen, welcher geringeren Variationen hinsichtlich des zeitlichen Verlaufs und/oder der Qualität unterworfen ist als ein manueller Handhabungsprozess.

Nachfolgend werden exemplarische Ausführungsbeispiele beschrieben. Es wird darauf hingewiesen, dass Ausführungsformen mit Bezug auf unterschiedliche Gegenstände beschrieben werden. Insbesondere sind einige Ausführungsbeispiele mit Vorrichtungsansprüchen und andere Ausführungsbeispiele mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die in Zusammenhang mit einem Typ von Gegenstand beschrieben werden, auch eine beliebige Kombination von Merkmalen möglich ist, die in Zusammenhang mit unterschiedlichen Typen von Gegenständen beschrieben werden.

Gemäß der Erfindung weist das Verfahren ferner ein Auswählen des zumindest einen Griffpunktes aus der Mehrzahl von vordefinierten Griffpunkten auf, wobei das Auswählen auf einer Bilderkennung basiert.

Insbesondere mag bei der Bilderkennung ein Bild des entnommenen Prothesenzahnes aufgenommen werden, welches nachfolgend einer automatischen Bilderkennung, beispielsweise mittels eines Computers oder einer Prozessoreinheit eines Computers, unterzogen wird. Anhand des erkannten Bildes kann nachfolgend die Auswahl aus einer Mehrzahl von vordefinierten möglichen Griffpunkten vorgenommen werden. Diese können beispielsweise in einem Speicher in Tabellenform für die verschiedenen Zahntypen hinterlegt sein oder alternativ erst nach der Aufnahme anhand des aufgenommenen Bildes. Insbesondere kann das Auswählen auf einer aus einer Bilderkennung gewonnenen Greifposition basieren. Bei der Auswahl mögen eines oder eine Mehrzahl von Kriterien berücksichtigt werden. Erfindungsgemäß mag die Auswahl basierend auf einer Zugänglichkeit der entsprechenden Griffpunkte getroffen werden. Ein anderes mögliches Kriterium mag die Komplexität oder Schwierigkeit eines notwendigen Bewegungsablaufs eines Greifarms berücksichtigt werden, welcher zum Aufnehmen des Prothesenzahnes an dem ausgewählten Griffpunkt bzw. zur Überführung aus der Aufnahmeposition in die vollständig definierte Position des Prothesenzahnes notwendig ist. Gemäß einem exemplarischen Ausführungsbeispiel weist das Verfahren ferner ein automatisches Ablegen des bezüglich seiner Position vollständig definierten Prothesenzahnes in eine Form auf.

Insbesondere mag die Form eine sogenannten Gegenform sein, welche eine Mehrzahl, beispielsweise sechs bis acht, von Einbuchtungen aufweist, welche dazu eingerichtet sind, Prothesenzähne aufzunehmen. Insbesondere mag vor dem Ablegen in der Form eine Qualitätsüberprüfung des Prothesenzahnes durchgeführt werden. Beispielsweise mag sich eine solche Qualitätsprüfung hinsichtlich der Oberfläche, welche bei einem späteren Gebiss, in welches der Prothesenzahn eingefügt wird, sichtbar ist, beschränken. Alternativ oder zusätzlich mag auch der gesamte Prothesenzahn hinsichtlich seiner Qualität überprüft werden.

Gemäß einem exemplarischen Ausführungsbeispiel weist das Verfahren ferner ein automatisches Aufpressen einer Zahnhalteinheit auf die Form auf.

Das automatische Aufpressen mag insbesondere mittels eines Greifers oder Greifarms durchgeführt werden, welcher mit einer Steuereinheit gesteuert wird.

Gemäß einem exemplarischen Ausführungsbeispiel weist das Verfahren ferner ein automatisches Verpacken des bezüglich seiner Position vollständig definierten Prothesenzahnes auf.

Insbesondere kann die Zahnhalteeinheit eine Zahnhalteplatte sein. Alternativ mag der Prothesenzahn in eine Sichtverpackung oder eine Blisterverpackung verpackt werden. Beispielsweise mag die Sichtverpackung oder Blisterverpackung für jeden einzelnen Prothesenzahn eine getrennte oder separate Aufnahme aufweisen.

Unter dem Begriff "Zahnhalteplatte" mag insbesondere jede Platte verstanden werden, welche den darauf aufgebrachten oder abgelegten Prothesenzahn festhält, so dass dieser nicht einfach von der Zahnhalteplatte fallen kann. Hierzu werden Zahnhalteplatten üblicherweise mit einem Klebebereich, mit einer Klebewachsschicht, einem Klebestreifen oder einer anderen zähviskosen Masse versehen, auf welcher die Zähne aufgebracht werden können. Insbesondere mag der Prothesenzahn oder die Prothesenzähne, welcher bzw. welche in die Form abgelegt wurde/wurden, auf die Zahnhalteplatte aufgebracht werden. Durch das Aufbringen eines oder einer Mehrzahl von Prothesenzähnen mag insbesondere eine bestückte Zahnhalteplatte bereitgestellt werden.

Insbesondere mag das automatische Aufpressen oder ein automatisches Einlegen mittels eines Handhabungsautomaten, Handhabungsvorrichtung oder Handhabungsroboters durchgeführt werden. Mittels des Aufpressens der Zahnhalteplatte auf die Form mögen die Prothesenzähne, welche sich in der Form befinden, auf die Zahnhalteplatte aufgebracht oder übertragen werden. Anders ausgedrückt mag ein Übertragen der Prothesenzähne, welche sich in der Form befinden auf die Zahnhalteplatte mittels eines automatischen Aufpressens der Zahnhalteplatte auf die Form durchgeführt werden. Durch die Automatisierung des Aufpressvorgangs mag es möglich sein, Zahnhalteplatten zu erzielen, auf welchen konfektionierte Prothesenzähne für eine nachfolgende Distribution definiert positioniert sind. Somit mag die Vorhersagbarkeit des zeitlichen Ablaufs und/oder einer gleichbleibenden Qualität verbessert werden.

Gemäß einem exemplarischen Ausführungsbeispiel des Verfahrens wird der hinsichtlich seiner Position vollständig definierte Prothesenzahn auf eine Zahnhalteeinheit, insbesondere auf eine Zahnhalteplatte, aufgebracht. Insbesondere mag das Aufbringen ohne vorherige Verwendung einer Form oder Gegenform geschehen.

Gemäß einem exemplarischen Ausführungsbeispiel weist das Verfahren ein automatisches Versehen der Zahnhalteeinheit mit einem Label auf.

Insbesondere mag unter dem Begriff Label jede Art von Etikettierung, Kennzeichnung oder Markierung verstanden werden. Beispiele für ein mit einem Label versehen mögen beispielsweise das Aufkleben eines Etiketts oder das direkte Bedrucken der Zahnhalteeinheit, beispielsweise mittels eines Druckers wie einem Laser- oder Tintenstrahldrucker sein. Insbesondere mag das Versehen mit dem Label, Etikett oder Etikettieren on-demand oder während des Aufbringens der Prothesenzähne auf die Zahnhalteplatte geschehen. Der Begriff "Etiketten" oder "Label" mag hierbei insbesondere lesbare Informationsträger umfassen, welche beispielsweise optisch, elektrisch, magnetisch oder auf andere Weise lesbar oder auslesbar sind. Insbesondere, mögen auf den Etiketten oder Label Informationen aufgebracht oder codiert werden, welche sich auf Typ, Charge, Produktionsdatum, Hersteller oder sonstige Größen beziehen. Somit mag es möglich sein, mittels der Informationen auf den Etiketten den Produktions- und/oder Handhabungsprozess der Prothesenzähne nachzuverfolgen. Beispielsweise mag es durch die Informationen möglich sein die auf einer Zahnhalteplatte angeordneten oder aufgebrachten Prothesenzähne einer spezifischen Charge oder einem Produktionsdatum zuzuordnen, so dass bei nachträglichem Feststellen von Produktionsmängeln der Produktionszeitraum eingegrenzt werden kann, so dass eine Fehlersuche vereinfacht werden mag.

Durch das on-demand Bereitstellen oder Herstellen der Etiketten oder Label mag es insbesondere möglich sein, darauf zu verzichten, dass vorab eine Anzahl von benötigten Etiketten oder mit Etiketten versehenen Zahnhalteeinheiten abgeschätzt werden muss. Eine solche Vorabschätzung, wie sie gewöhnlich bei manuellen Handhabungsprozessen nötig ist, ist typischerweise mit Fehlern verbunden, so dass es möglicherweise zu Problemen bei der Handhabung oder zu unnötiger Bereitstellung zu vieler etikettierter Zahnhalteplatten kommen kann, was durch ein Bereitstellen on-demand gemäß dem exemplarischen Ausführungsbeispiel vermieden werden kann.

Gemäß einem exemplarischen Ausführungsbeispiel weist das Verfahren ferner eine automatische Qualitätsprüfung des bezüglich seiner Position vollständig definierten Prothesenzahnes auf.

Insbesondere mag die automatische Qualitätsprüfung mittels einer automatischen und/oder indirekten Sichtprüfung, beispielsweise hinsichtlich möglicher Prozessfehler, durchgeführt werden. Somit mag mittels einer Sichtprüfung entschieden werden, ob während eines Aufbringens der Prothesenzähne auf die Zahnhalteeinheit, diese beschädigt wurden und/oder ob diese an der gewünschten oder vorgesehenen Position und/oder in der gewünschten oder vorgesehenen Ausrichtung aufgebracht wurden. Basierend auf der automatischen Qualitätsprüfung mag eine Sortierung und/oder Aussonderung einzelner bestückter Zahnhalteeinheit vorgenommen werden. Beispielsweise mögen alle Prothesenzähne, welche auf der Zahnhalteeinheit oder Zahnhalteplatte angebracht sind, gleichzeitig einer Sichtprüfung unterzogen werden.

Insbesondere mag eine automatisierte Sichtprüfung oder Qualitätsprüfung der gesamten, später in einem Gebiss sichtbaren Oberfläche des einzelnen Prothesenzahn oder Einzelzahnes durchgeführt werden. Die Sichtprüfung mag während oder nach verschiedenen Schritten durchgeführt werden, Beispielsweise mag die Sichtprüfung nach dem anfänglichen Bringen in eine vollständig definierte Position und/oder nach dem Einlegen in eine Gegenform und/oder nach dem Aufbringen auf der Zahnhalteeinheit bzw. Zahnhalteplatte und/oder nach dem Einlegen in die Distributionseinheit durchgeführt werden.

Gemäß einem exemplarischen Ausführungsbeispiel des Verfahrens weist die Qualitätsprüfung ein Aufnehmen eines Bildes der Zahnhalteeinheiten, insbesondere der Zahnhalteplatte auf.

Insbesondere mag die Bildaufnahme, beispielsweise eine rechnergestützte Einzel-Bildaufnahme mittels einer digitalen oder auch analogen Kamera, nachfolgend rechnergestützt verarbeitet werden. Beispielsweise mag die Qualitätsprüfung bzw. eine nachfolgende Ergebnisauswertung mittels parametrisierter Ergebnisauswertung durchgeführt werden. Die parametrisierte Ergebnisauswertung mag hierbei insbesondere rechnergestützt durchgeführt werden und beispielweise eine automatisierte Entscheidung hinsichtlich Qualitätsvorgaben beinhalten. Insbesondere mag bei der Aufnahme des Bildes die bestückte Zahnhalteplatte, beispielweise mittels einer Vorrichtung oder mittels einer Vorrichtung geführt, fixiert sein.

Gemäß einem exemplarischen Ausführungsbeispiel weist das Verfahren ein Positionieren der Zahnhalteeinheit auf einer Distributionseinheit auf.

Insbesondere mögen nur die Zahnhalteeinheiten in die Distributionseinheit eingelegt werden, welche eine vorherige Qualitätsprüfung erfüllt haben, d.h. welche vorgegebene Qualitätsvorgaben eingehalten haben. Unter einer Distributionseinheit mag insbesondere eine Einheit, beispielsweise ein Rahmen oder Kasten, verstanden werden, in welche eine Mehrzahl von Zahnhalteplatten eingelegt werden können oder auf der eine Mehrzahl von Zahnhalteplatten positioniert werden können. Eine solche Distributionseinheit mag hierbei insbesondere für Transporte geeignet sein. Insbesondere mögen Distributionseinheiten derart ausgebildet sein, dass diese eine Mehrzahl von Vertiefungen in einem Kasten oder Rahmen aufweisen, in welche die Zahnhalteplatten bündig eingelegt werden können. Neben Distributionseinheiten, welche für jede Zahnhalteeinheit oder Zahnhalteplatte eine Vertiefung vorsehen, können auch Distributionseinheiten verwendet werden, welche eine im Wesentlichen glatte Oberfläche haben, auf welche die Zahnhalteeinheiten bzw -platten strukturiert, beispielsweise mit einer eindeutigen Orientierung oder Ausrichtung aufgelegt werden können, während eine fixe Einteilung für die einzelnen Zahnhalteplatten nicht notwendigerweise gegeben sein muss. Als gemeinsames Merkmal für alle möglichen Distributionseinheiten mag somit gegeben sein, dass mehrere Zahnhalteplatten oder allgemeiner Zahnhalteeinheiten strukturiert in einem Kasten oder Rahmen mit einem, vorzugsweise erhobenen, Rand abgelegt werden können

Anschaulich mag ein exemplarisches Ausführungsbeispiel eines Handlingverfahrens oder Handlingprozesses insbesondere ein automatisiertes Überführen eines oder einer Mehrzahl von Prothesenzähnen von einer nur unvollständig definierten Position oder Lage in eine vollständig definierte Position oder Lage ermöglichen. Insbesondere kann hierbei ein vereinzelter Prothesenzahn mittels einer automatischen Griffeinrichtung, beispielweise einem rechnergesteuerten Greifer oder Greifarm aus einem Schüttgutbehältnis gegriffen werden, wobei das Greifen an einem oder mehreren vordefinierten oder vorab als mögliche Griffpunkte definierten Stellen des Prothesenzahnes vorgenommen wird. Durch die Verwendung von vordefinierten Griffpunkten an den Prothesenzähnen mag es nachfolgend auf einfache Weise möglich sein, den ausgewählten bzw. gegriffenen Prothesenzahn in eine vollständig definierte Position zu überführen. Insbesondere mag es bei einem nachfolgend ebenfalls vollautomatisch durchgeführten Prozess nicht mehr nötig sein, weitere Positions- und/oder Ausrichtungsüberprüfungen oder Erkennungen durchzuführen, da für jeden weiteren automatischen Handhabungs- oder Handlingschritt die Änderung der Position und/oder Ausrichtung gegeben ist. Insbesondere sollte angemerkt werden, dass alle Verfahrensschritte, welche automatisch durchgeführt werden mittels einer einzelnen oder mehrerer automatische Greifeinrichtung(en), Greifer oder Greifarmen durchgeführt werden können, welche(r) mittels einer Steuereinheit, beispielsweise mittels eines Computers oder einer Prozessoreinheit gesteuert wird. Die Steuerung mag hierbei insbesondere einen vorgespeicherten Bewegungsablauf oder einen jeweils neu berechneten Bewegungsablauf folgen bzw. ermöglichen.

Es wird darauf hingewiesen, dass Ausführungsbeispiele der Erfindung mit Bezug auf unterschiedliche Erfindungsgegenstände beschrieben wurden. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben. Es zeigen:
Figur 1 zeigt ein schematisches Ablaufdiagramm eines Handhabungsprozesses gemäß einem exemplarischen Ausführungsbeispiel.
Figur 2 zeigt eine schematische Gegenform.
Figur 3 zeigt eine schematische Zahnhalteplatte.
Figur 4 zeigt eine schematische Distributionseinheit.
Figur 5 zeigt eine schematische Greif- und Positioniereinheit für einen Prothesenzahn.

### Detaillierte Beschreibung von exemplarischen Ausführungsformen

Gleiche oder ähnliche Komponenten in unterschiedlichen Figuren sind mit gleichen Bezugsziffern versehen. Die Darstellungen in den Figuren sind schematisch.

Nachfolgend wird ein exemplarisches Beispiel für ein Konfektionierungsverfahren für Prothesenzähne beschrieben, welche typischerweise chargenweise in einem Pressverfahren als Kunststoffprothesenzähne hergestellt werden. Innerhalb des Konfektionierungsverfahrens wird als ein Teilverfahren oder Teilmodul ein Verfahren zum Positionieren eines Prothesenzahnes innerhalb des Konfektionierungsverfahrens verwendet.
A1) Ein erster Schritt betrifft ein automatisiertes Sortieren des produktionsbedingt vorliegenden Schüttgutes einer produzierten Charge von Kunststoffprothesenzähnen mittels einer gesteuerten Vereinzelung oder Separation der Zähne. Nachfolgend kann eine Bildaufnahme mit Bildauswertung und eine parameterabhängige Klassifizierung inklusive einer automatisierten Zuordnung in je ein Behältnis pro Zahntyp durchgeführt werden. Somit liegen die Prothesenzähne in Form von vorsortierten Schüttgut vor, welches in Schüttgut-Einheiten bereitgestellt wird.
A2) Ein zweiter Schritt betrifft eine automatisierte Vereinzelung der Prothesenzähne aus den vorsortierten, typenspezifischen Schüttgut-Einheiten. Hierzu erfolgt aufgrund von vorab berechneten oder bestimmten möglichen Griffpunkten ein rechnerbasiert gesteuertes Greifen eines jeweils vereinzelt vorliegenden Prothesenzahnes entweder direkt aus der Schüttgut-Einheit oder nach Ausschüttung der Prothesenzähne aus der Schüttgut-Einheit.
   Als Ergebnis dieses Schrittes wird das vereinzelt vorliegende Objekt (Einzelzahn) von einer unvollständig definierten Lage in eine (relativ zum Gesamtsystem) vollständig definierte Position bzw. Lage übergeführt. Diese vollständig definierte Position entspricht hierbei einer reproduzierbaren Fixposition, welche es ermöglicht, dass der gesamte Handlingsprozess oder Konfektionierungsprozess automatisiert werden kann.
A3) Als nachfolgender optionaler Schritt kann eine Qualitätsprüfung der gesamten, später in einem Gebiss sichtbaren Oberfläche des Einzelzahnes hinsichtlich produktionsbedingt möglicher Fehler durchgeführt werden. Insbesondere kann als ein Schritt der Qualitätsprüfung vorgesehen sein, dass ein einzelner oder eine Mehrzahl von Prothesenzähnen positionsgenau reproduzierbar einer Bildaufnahmeeinheit zugeführt wird. Alternativ kann auch der gesamte Einzelzahn auf mögliche Fehler überprüft werden.
A4) Nachfolgend findet ein automatisiertes Ablegen der einzelnen Prothesenzähne, welche Qualitätsvorgaben entsprechen, in eine Gegenform mit konkaven Einbuchtungen für, beispielsweise sechs bis acht, Einzelzähne nach Konfektionierungsvorgaben statt.
A5) Als optionaler Schritt kann eine eindeutige Kennzeichnung, Beschriftung oder Etikettierung von Zahnhalteplatten "on demand" durchgeführt werden. Insbesondere kann diese automatisiert direkt im Prozess basierend auf den digital spezifisch vorliegenden Produktinformationen, z.B. hinsichtlich Typ und Charge, etc., erfolgen. Im Gegensatz zu einem manuellen Verfahren kann es somit genügen, dem Gesamtprozess eine unbestimmte Menge an leeren und unbeschrifteten, Zahnhalteplatten zuzuführen. Dies mag den Vorteil haben, dass weder die Gefahr besteht zu viele noch die Gefahr besteht zu wenige beschriftete Zahnhalteplatten je Charge vorzuhalten. Im manuellen Verfahren lässt sich typischerweise die genaue benötigte Anzahl nicht ausreichend genau abschätzen. Alternativ zu der on-demand Beschriftung können jedoch auch bereits vorab etikettierte Zahnhalteplatten verwendet werden.
A6) Nachfolgend kann ein automatisiertes, mittels einer Vorrichtung unterstütztes Aufpressen einer Zahnhalteplatte auf die Gegenform ausgeführt werden, um die konfektionierten Einzelzähne für eine nachfolgende Distribution definiert zu positionieren.
A7) In einem nachfolgenden Schritt kann eine automatisierte indirekte Sichtprüfung der bestückten Zahnhalteplatte hinsichtlich möglicher Prozessfehler aus A4) bis A6) durchgeführt werden. Insbesondere kann die Sichtprüfung unter Verwendung einer, beispielsweise vorrichtungsgeführten, Fixierung der Zahnhalteplatte mit anschließender rechnergestützter Einzel-Bildaufnahme, Bildverarbeitung und objektive parameterbasierter Ergebnisauswertung, inklusive automatisierter Entscheidung hinsichtlich Qualitätsvorgaben, durchgeführt werden.
A8) Als weiterer optionaler Schritt kann ein automatisiertes Einlegen der den Qualitätsvorgaben entsprechenden, bestückten Zahnhalteplatten in handelsübliche Distributionseinheiten durchgeführt werden. Dies kann mittels eines Greifers oder Greifarms durchgeführt werden.

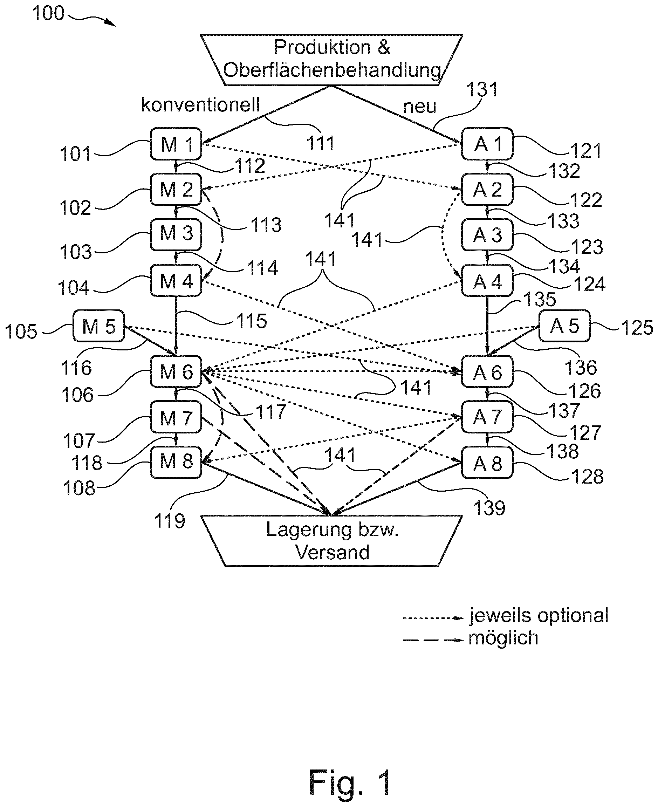

Die oben beschriebenen acht Schritte A1) bis A8) sind schematisch im Ablaufdiagramm der **Figur 1** dargestellt. Insbesondere zeigt Figur 1, dass das Verfahren in modularer Form aufgebaut ist, bei dem zwischen den einzelnen Schritten zwischen einem Ablauf mit manuell durchgeführten Schritten M1) bis M8) und automatisch ausgeführten Schritten A1) bis A8) gewechselt werden kann, wobei der in Figur 1 dargestellte Ablauf jedoch nur exemplarisch ist. Insbesondere sind alle Übergänge zwischen einen automatischen Ablauf der Schritte A1) bis A8) optional und werden insbesondere dann vorgenommen, falls einzelne automatische Schritte nicht möglich oder nicht notwendig sind, um einen gewünschten Ablauf oder eine gewünschte Qualität des Gesamtprozesses zu erzielen. Gemäß dem exemplarischen Ausführungsbeispiel kann somit jeder Zahnhersteller oder -konfektionierer auswählen, welche der Schritte automatisch oder, beispielswiese aus Kostengründen, manuell durchgeführt werden.

Den Startpunkt des mit Figur 1 beschriebenen Prozesses oder Verfahrens 100 bildet die Bereitstellung einer Mehrzahl von produzierten und bereits oberflächenbehandelten Prothesenzähnen.

In Figur 1 auf der linken Seite ist mit den Schritten M1) bis M8) schematisch ein Prozessablauf für ein rein manuell durchgeführtes Verfahren dargestellt. Hierbei sind die einzelnen Schritte M1) bis M8) 101 bis 108 jeweils mit durchgezogenen Pfeilen 111 bis 119 verbunden.

In Figur 1 auf der rechten Seite ist mit den Schritten A1) bis A8) schematisch ein Prozessablauf für ein rein automatisch oder maschinell durchgeführtes Verfahren dargestellt. Hierbei sind die einzelnen Schritte A1) bis A8) 121 bis 128 jeweils mit durchgezogenen Pfeilen 131 bis 139 verbunden.

Zusätzlich sind eine Vielzahl von gestrichelten Pfeilen 141 dargestellt, welche mögliche Übergänge zwischen einem manuellen Verfahrensschritt und einem nachfolgenden oder vorausgehenden automatischen Verfahrensschritt oder umgekehrt darstellen sollen.

Allgemein gesagt zeigt Figur 1 somit anschaulich den modularen Aufbau des Verfahren bzw. des hierzu verwendeten Systems, da die einzelnen Schritte somit Module darstellen, welche je nach Wunsch bzw. Gegebenheiten ausgetauscht werden können. Beispielsweise kann der Verfahrensschritt A8) durch den manuellen Verfahrensschritt M8) ersetzt werden, sollte keine Einrichtung vorhanden sein, welche die bestückten Zahnhalteplatten in eine Distributionseinheit einlegen kann oder wenn diese gerade nicht einsatzbereit ist. Insbesondere können somit einzelne Prozess- oder Verfahrensschritte je nach Anforderung des Anwenders dennoch auf manuelle Weise durchgeführt werden.

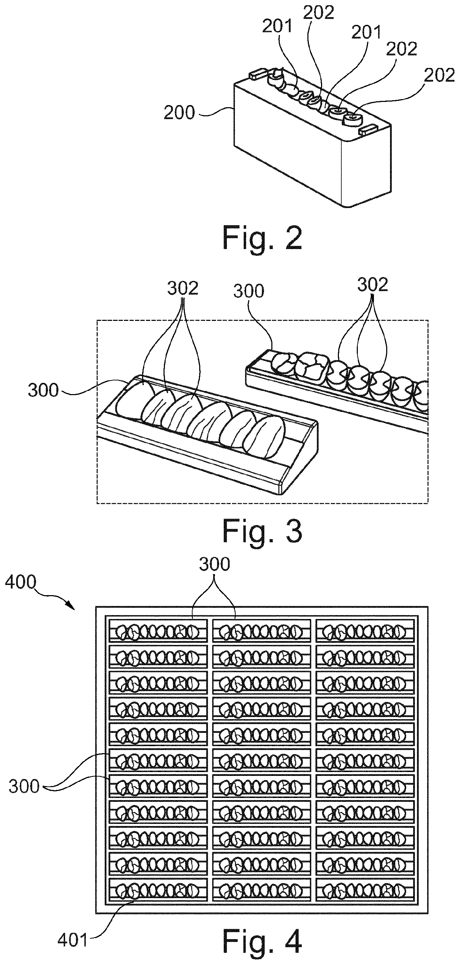

**Figur 2** zeigt schematisch eine Gegenform 200 mit einer Mehrzahl von Vertiefungen 201, welche dazu eingerichtet sind, Prothesenzähne 202 aufzunehmen. Insbesondere können die Prothesenzähne 202 mittels eines Greifers, einer Pinzette oder ähnlichem in die Vertiefungen eingelegt werden. Hierdurch mag es möglich sein, die Prothesenzähne an eine neue Stelle zu bringen, in der sie eine definierte Position oder Lage aufweisen bzw. deren Definiertheit der Position beizubehalten. Aus dieser definierten Position oder Lage können sie nachfolgend weiteren Prozess- oder Handhabungsschritten unterzogen werden.

**Figur 3** zeigt schematisch zwei Zahnhalteplatten 300, welche eine viskose Masse aufweisen, auf welcher eine Mehrzahl von Prothesenzähnen 302 aufgebracht oder abgelegt ist. Durch das Vorsehen der viskosen oder klebrigen Masse können die Prothesenzähne in ihrer Lage oder Position fixiert werden.

**Figur 4** zeigt schematisch eine Distributionseinheit 400, welche einen Kasten oder Rahmen 401 aufweist und welche eine Mehrzahl von Vertiefungen oder Ausbuchtungen aufweist, in welche Zahnhalteplatten 300 eingelegt werden können, wie dies in Figur 4 zu sehen ist.

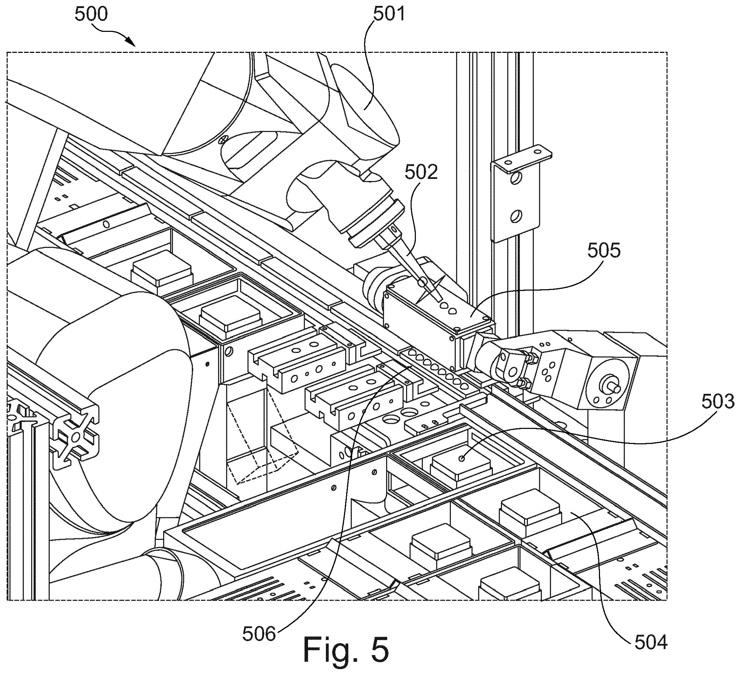

**Figur 5** zeigt schematisch einen Handhabungssystem 500, welches an einem Manipulator- oder Greifarm 501 eine Greifeinheit, beispielweise eine Pipette, 502 aufweist, mittels derer Prothesenzähne 503 aus einer Bereitstellungseinheit 504 entnommen werden können. In dieser Bereitstellungseinheit sind die Prothesenzähne vorzugsweise bereits in einer vollständig definierten Position bzw. Lage abgelegt. Diese vollständig definierte Position mag insbesondere nach dem Schritt A2) des in Figur 1 beschriebenen Verfahrens erstmals vorliegen. Mittels der Greifeinheit kann dann der an einer oder mehreren vordefinierten Griffpunkten aufgenommene Prothesenzahn in eine Gegenform 505 gelegt werden. Auf welche dann, nach einer vollständigen Befüllung der Gegenform, eine Zahnhalteplatte 506 gepresst werden kann, wodurch die Prothesenzähne der Gegenform auf die Zahnhalteplatte oder sonstige Zahnhalteeinheit übertragen werden. Die gesamte Steuerung des Handhabungssystems kann mittels einer in Figur 5 nicht dargestellten Rechnereinheit oder eines Prozessors gesteuert werden. Auch kann optional eine Bildaufnahmeeinheit, z.B. eine Digitalkamera, vorgesehen sein, welche Einzelbilder der einzelnen Prothesenzähne oder der bestückten Zahnhalteplatten aufnimmt. Mittels dieser Bildaufnahme und einer Bildauswertung ist es möglich, eine automatische Qualitätssicherung, beispielsweise mittels einer Sichtprüfung, vorzunehmen.

Insgesamt ist somit mit dem Handhabungssystem 500 möglich, einen vollständig automatisierten Konfektionierungsprozess oder ein Handhabungsverfahren durchzuführen, welches insbesondere einen Schritt des Überführen eines Prothesenzahnes aus einer nicht vollständig definierten Position oder Lage in eine vollständig definierte Position oder Lage beinhaltet. Jedoch können auch einzelne der oben definierten Schritte gemäß einem manuellen Konfektionierungsprozesses durchgeführt werden.

Insbesondere mag der vollständig oder zumindest teilweise automatisierte Prozess es ermöglichen, einen automatisierten Ablauf des Zahnhandlings nachfolgend einem üblichen Produktionsverfahren Pressen, eine automatisierte Qualitätssicherung mittels bildverarbeitenden Verfahren aus einer fixen Position oder Lage des/der Prothesenzähne(n) und optional eine on-demand Beschriftungsmöglichkeit der Zahnhalteplatten zu ermöglichen. Insbesondere mag hierbei unabhängig von der Produktionsmethode zur nachfolgenden Konfektionierung eine reproduzierbare Fixposition jedes Prothesenzahnes ermöglicht werden. Ausgehend von solch einer reproduzierbaren Fixposition kann optional zumindest eine automatisierte indirekte Sichtprüfung durchgeführt werden, insbesondere wenn die Fixierung zumindest für die Dauer einer hierfür verwendeten Bildaufnahme gewährt ist bzw. gehalten wird.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können.

## Patentansprüche

1. Automatisches Verfahren zum Positionieren eines Prothesenzahnes mittels eines modularen Systems, wobei das Verfahren aufweist:
Bereitstellen von Prothesenzähnen in einem Schüttgutbehältnis, welche unsortiert vorliegen,
automatisches Greifen eines spezifischen Prothesenzahnes an zumindest einem aus einer Mehrzahl von vordefinierten Griffpunkten,
wobei ein Auswählen des zumindest einen Griffpunktes aus der Mehrzahl von vordefinierten Griffpunkten auf einer Bilderkennung basiert, wobei die Auswahl auf der Zugänglichkeit der entsprechenden Griffpunkte getroffen wird, und
automatisches Positionieren des gegriffenen Prothesenzahnes in eine vollständig definierte Position.

2. Verfahren gemäß Anspruch 1, ferner aufweisen:
Auswählen des zumindest einen Griffpunktes aus der Mehrzahl von vordefinierten Griffpunkten, wobei das Auswählen auf einer Bilderkennung basiert.

3. Verfahren gemäß Anspruch 1 oder 2, ferner aufweisend:
automatisches Ablegen des bezüglich seiner Position vollständig definierten Prothesenzahnes in eine Form.

4. Verfahren gemäß Anspruch 3, ferner aufweisend:
automatisches Aufpressen einer Zahnhalteplatte auf die Form.

5. Verfahren gemäß einem der Ansprüche 1 bis 3, wobei der hinsichtlich seiner Position vollständig definierte Prothesenzahn, auf eine Zahnhalteinheit aufgebracht wird.

6. Verfahren gemäß Anspruch 4 oder 5, ferner aufweisend:
automatisches Versehen der Zahnhalteeinheit mit einem Label.

7. Verfahren gemäß einem der Ansprüche 1 bis 6, ferner aufweisend:
automatische Qualitätsprüfung des bezüglich seiner Position vollständig definierten Prothesenzahn.

8. Verfahren gemäß Anspruch 7,
wobei die Qualitätsprüfung ein Aufnehmen eines Bildes der Zahnhalteeinheit aufweist.

9. Verfahren gemäß Anspruch 4 bis 8, ferner aufweisend:
Einlegen der Zahnhalteeinheit in eine Distributionseinheit.

10. Modulares System zum Positionieren eines Prothesenzahnes, wobei das modulare System aufweist:
eine Prozessoreinheit,
ein Schüttgutbehältnis,
eine automatische Greifeinrichtung, wobei die Prozessoreinheit dazu eingerichtet ist, ein Steuersignal zu erzeugen, das derart eingerichtet ist, dass es Bewegungen, der Greifeinrichtung steuert, sodass sie einen spezifischen Prothesenzahn, welcher in einer Mehrzahl von unsortierten Prothesenzähnen in dem Schüttgutbehältnis vorliegt, an zumindest einem aus einer Mehrzahl von vordefinierten Griffpunkten greift,
wobei ein Auswählen des einen Griffpunktes aus der Mehrzahl von vordefinierten Griffpunkten auf einer Bilderkennung basiert, wobei die Auswahl auf der Zugänglichkeit der entsprechenden Griffpunkte getroffen wird, und
eine automatische Positioniereinrichtung, wobei die Prozessoreinheit dazu eingerichtet ist, die Positioniereinrichtung zu steuern, sodass sie den gegriffenen Prothesenzahn in eine vollständig definierte Position bezüglich des modularen Systems bringt.

## Claims

1. Automatic method for positioning a prosthesis tooth by a modular system, wherein the method has:
providing prosthesis teeth in a containerfor bulk goods, which teeth are available unsorted,
automatically gripping a specific prosthesis tooth at at least one of a plurality of predefined gripping points,
wherein a selecting of the at least one gripping point from the plurality of predefined gripping points is based on an image recognition, wherein the selection is made on the accessibility of the corresponding gripping points, and
automatically positioning the gripped prosthesis tooth in a completely defined position.

2. Method according to claim 1, further having:
selecting the at least one gripping point from the plurality of predefined gripping points, wherein the selecting is based on an image recognition.

3. Method according to claim 1 or 2, further having:
automatically laying the prosthesis tooth, which is completely defined in respect of its position, down into a form.

4. Method according to claim 3, further having:
automatically pressing on a tooth holding plate onto the mould.

5. Method according to any one of the claims 1 to 3, wherein the prosthesis tooth, which is completely defined in respect of its position, is applied onto a tooth holding unit.

6. Method according to claim 4 or 5, further having:
automatically providing the tooth holding unit with a label.

7. Method according to any one of the claims 1 to 6, further having:
an automatic quality inspection of the prosthesis tooth, which is completely defined in respect of its position.

8. Method according to claim 7,
wherein the quality inspection has a recording of an image of the tooth holding unit.

9. Method according to any one of the claims 4 to 8, further having:
laying the tooth holding unit in into a distribution unit.

10. Modularsystem for positioning a prosthesis tooth, wherein the modular system has:
a processor unit,
a containerfor bulk goods,
an automatic gripping device, wherein the processor unit is configured to generate a control signal, which is configured such that is controls movements of the gripping device, such that it grips a specific prosthesis tooth, which is available in a plurality of unsorted prosthesis teeth in the containerfor bulk goods, at at least one of a plurality of predefined gripping points,
wherein a selecting of the at least one gripping point from the plurality of predefined gripping points is based on an image recognition, wherein the selection is made on the accessibility of the corresponding gripping points, and
an automatic positioning device, wherein the processor unit is configured to control the positioning device, such that it brings the gripped prosthesis tooth in a completely defined position with respect to the modular system.

## Revendications

1. Procédé automatique de positionnement d'une dent prothétique au moyen d'un système modulaire, **caractérisé en ce que** le procédé présente :
la mise à disposition de dents prothétiques dans un récipient de produit en vrac, lesquelles sont présentes non triées,
la préhension automatique d'une dent prothétique spécifique à au moins un d'une pluralité de points de préhension prédéfinis,
dans lequel une sélection d'au moins un point de préhension à partir de la pluralité de points de préhension prédéfinis se base sur une détection d'image, dans lequel la sélection est faite sur l'accessibilité des points de préhension correspondants, et
le positionnement automatique de la dent prothétique saisie dans une position entièrement définie.

2. Procédé selon la revendication 1, présentant en outre :
la sélection d'au moins un point de préhension à partir de la pluralité de points de préhension prédéfinis, **caractérisé en ce que** la sélection se base sur une détection d'image.

3. Procédé selon la revendication 1 ou 2, présentant en outre :
le dépôt automatique de la dent prothétique entièrement définie en ce qui concerne sa position dans un moule.

4. Procédé selon la revendication 3, présentant en outre :
le pressage automatique d'une plaque porte-dent sur le moule.

5. Procédé selon l'une quelconque des revendications 1 à 3, **caractérisé en ce que** la dent prothétique entièrement définie en ce qui concerne sa position est montée sur une unité porte-dent.

6. Procédé selon la revendication 4 ou 5, présentant en outre :
l'équipement automatique de l'unité porte-dent d'une étiquette.

7. Procédé selon l'une quelconque des revendications 1 à 6, présentant en outre :
le contrôle qualité automatique de la dent prothétique entièrement définie en ce qui concerne sa position.

8. Procédé selon la revendication 7,
**caractérisé en ce que** le contrôle qualité présente une capture d'une image de l'unité porte-dent.

9. Procédé selon la revendication 4 à 8, présentant en outre :
la pose de l'unité porte-dent dans une unité de distribution.

10. Système modulaire de positionnement d'une dent prothétique, **caractérisé en ce que** le système modulaire présente :
une unité de processeur,
un récipient de produit en vrac,
un dispositif de préhension automatique, dans lequel l'unité de processeur est aménagée pour générer un signal de commande, qui est aménagé de sorte qu'il commande des mouvements du dispositif de préhension de sorte qu'il saisit une dent prothétique spécifique, laquelle est présente dans une pluralité de dents prothétiques non triées dans le récipient de produit en vrac, au niveau d'au moins un d'une pluralité de points de préhension prédéfinis,
dans lequel une sélection d'au moins un point de préhension à partir de la pluralité de points de préhension prédéfinis se base sur une détection d'image, dans lequel la sélection est faite sur l'accessibilité des points de préhension correspondants, et
un dispositif de positionnement automatique, dans lequel l'unité de processeur est aménagée pour commander le dispositif de positionnement de sorte qu'il amène la dent prothétique saisie dans une position entièrement définie en ce qui concerne le système modulaire.
